# FASCICULE DE BREVET EUROPEEN

(11) **EP 2 417 028 B1**
(45) Date de publication et mention de la délivrance du brevet: **20.08.2014**
(21) Numéro de dépôt: 10717693.5
(22) Date de dépôt: 31.03.2010
(51) Int. Cl.: G01N 35/10, G01N 35/04, B65B 3/00

(54) **DISPOSITIF DE REMPLISSAGE DE CARTES GEL COMPORTANT UN IONISEUR**
VORRICHTUNG ZUM BEFÜLLEN VON BEHÄLTNISSE TYP GELKARTE, ENTHALTEND EIN MITTEL ZUM IONISIEREN
DEVICE FOR FILLING A CARD TYP GEL, HAVING MEANS FOR IONISATION

(30) Priorité: 08.04.2009 FR 0952290
(43) Date de publication de la demande: 15.02.2012
(73) Titulaire: Bio-Rad Innovations, 92430 Marnes-La-Coquette (FR)
(72) Inventeur: BUFFIERE, Frédéric, 33600 Pessac (FR); PETIT, Serge, 42640 Noailly (FR); BRISEBRAT, Jean-Michel, 42460 Villers (FR)
(74) Mandataire: Henrich, Christel
(86) Numéro de dépôt international: PCT/FR2010/050602
(87) Numéro de publication internationale: WO 2010/116069

(56) Documents cités:
- DE-A1- 2 151 729
- US-A- 5 780 248
- US-A1- 2001 039 977

## Description

La présente invention concerne le domaine des appareils pour réaliser des analyses médicales.

Traditionnellement, de tels appareils, également appelés automates d'analyses, permettent d'automatiser certains protocoles, comme par exemple le pipetage de liquides dans des cartes gel. Ce protocole consiste à verser une quantité de liquide prédéterminée dans un puits réactionnel d'une carte gel contenant un ou plusieurs réactifs. Ce liquide peut par exemple être un échantillon sanguin, ou tout autre type de prélèvement humain.

De manière connue, une carte gel est un réceptacle contenant un ou plusieurs puits réactionnels qui sont initialement obturés par un opercule. Après avoir percé l'opercule et versé le liquide, des réactions chimiques se déroulent entre le liquide versé et le ou les réactifs de la carte.

Généralement, la quantité de liquide déversée est très petite, de l'ordre d'une dizaine de microlitres de sorte que l'on parle généralement de « dose ». Qui plus est, le remplissage des puits doit respecter certains critères de qualité. Parmi ces critères, on mentionnera pus particulièrement celui relatif à la création d'une poche d'air (air-gap en anglais) entre la dose de liquide dispensée dans le puits et le réactif préalablement présent au fond du puits, ainsi que le critère relatif à l'absence d'éclaboussures de liquide sur la paroi interne du puits. Les éclaboussures proviennent le plus souvent d'un fractionnement plus ou moins important, mais toujours aléatoire, de la dose de liquide dispensée.

La présence d'une poche d'air a pour effet d'interdire provisoirement le contact physique entre la dose de liquide dispensée et le réactif. Un intérêt est de maîtriser l'instant à partir duquel la réaction chimique doit débuter. En pratique, les cartes gel sont incubées et centrifugées après la dispense de la dose de liquide conduisant ainsi à la réaction chimique.

L'absence d'éclaboussures est quant à elle nécessaire afin d'éviter qu'une fraction de la dose de liquide ne reste accrochée aux parois du puits et soit ainsi soustraite au mélange réactionnel incubé et centrifugé.

Pour résoudre le premier problème, le document US 5 780 248 propose l'utilisation d'accessoires consommables en matière plastique, cet accessoire étant constitué par un insert pourvu de six cavités à extrémité inférieure pointue. De plus, les extrémités inférieures des cavités sont munies d'un très petit trou. Cet accessoire est destiné à être manuellement planté dans une carte gel, les extrémités des cavités venant perforer l'opercule obturant les puits de la carte gel. Chacune des cavités de l'accessoire vient se loger dans un puits de la carte gel. Ensuite, une dose de liquide est dispensée dans chacune des cavités de l'accessoire. Grâce à cet accessoire, l'opérateur n'a pas à se soucier de la formation ou non d'une poche d'air, dans la mesure où la cavité isole la dose de liquide dispensée du réactif contenu dans le fond du puits. Il apparaît également que l'utilisation de tels accessoires permet de diminuer la présence d'éclaboussures.

Cependant, cette solution présente plusieurs inconvénients : les accessoires doivent être achetés, stockés et manipulés. Qui plus est, l'installation des accessoires sur les cartes gel doit nécessairement se faire manuellement, ce qui se révèle malcommode et peu rapide.

Un but de la présente invention est de proposer un dispositif de remplissage d'au moins un réceptacle de type carte gel initialement fermé par un opercule, permettant un remplissage automatique tout en remédiant aux inconvénients précités.

L'invention atteint son but par le fait que le dispositif de remplissage comporte un organe de perçage pour perforer l'opercule, des moyens pour supprimer les charges électrostatiques susceptibles d'être portées par le réceptacle, et des moyens de remplissage pour remplir le réceptacle après perforation de l'opercule et suppression des charges électrostatiques.

Les inventeurs ont en effet constaté que la suppression des charges électrostatiques sur le réceptacle permet d'éviter nettement la formation d'éclaboussures sur les parois internes du réceptacle. En effet, il se trouve que les charges électrostatiques portées par le réceptacle ont tendance à disloquer la dose de liquide au moment où elle quitte les moyens de remplissage. Il s'ensuit que certaines fractions de la dose viennent se coller contre la paroi interne du réceptacle, en raison des forces d'attraction créées par les charges électrostatiques.

On comprend donc que le dispositif de remplissage selon l'invention permet avantageusement d'éviter la formation d'éclaboussures. De plus, la présente invention ne nécessite pas l'utilisation de consommables contrairement aux dispositifs antérieurs. Un autre intérêt de la présente invention est qu'elle permet un remplissage automatique.

Qui plus est, la formation de la poche d'air est favorisée par l'absence de force électrostatique tendant à dévier la dose lâchée par les moyens de remplissage.

De préférence, le réceptacle est une carte, du type carte gel, qui comporte une pluralité de puits fermés par l'opercule, chacun des puits contenant un ou plusieurs réactifs.

Avantageusement, l'organe de perçage comporte une herse de perçage munie d'une pluralité de pointes de perçage qui sont destinées à pénétrer dans les puits en traversant l'opercule.

Un intérêt de la herse est qu'elle permet de percer en une seule fois plusieurs trous dans l'opercule, ces trous étant ceux par lesquels les moyens de remplissage déversent le liquide dans les puits.

De préférence, la herse comporte autant de pointes que le nombre de puits de la carte gel, grâce à quoi, l'opération de perçage de l'opercule d'une carte gel est réalisée en une seule fois.

De manière particulièrement avantageuse, les moyens pour supprimer les charges électrostatiques comprennent un ioniseur. Ce dernier génère un flux d'ions de charge alternativement positive et négative, ce flux d'ions étant envoyé vers le réceptacle, de préférence après que l'opercule a été perforé. Cette alternance permet de supprimer les charges électrostatiques portées par les puits de la carte gel.

De préférence, l'ioniseur est apte et destiné à générer un champ électrique produisant un effet corona. Cet effet corona, connu en soi, est également appelé effet couronne.

Selon un mode de réalisation préféré, le dispositif de remplissage présente une direction d'amenée des réceptacles vers l'organe de perçage et l'ioniseur est constitué d'au moins une rampe d'ionisation s'étendant transversalement par rapport à cette direction d'amenée. Cette rampe est de préférence disposée au plus près de la zone de perçage afin d'ioniser la carte gel aussitôt l'opercule percé.

De plus, l'ioniseur comporte préférentiellement une pluralité d'électrodes visant une zone dans laquelle le réceptacle est destiné à se trouver lors du perçage de l'opercule dudit réceptacle.

Sans sortir du cadre de la présente invention, on pourrait également utiliser un ioniseur pourvu de moyens pour souffler l'air ionisé vers la carte gel.

De préférence la rampe d'ionisation s'étend entre les deux bras mobiles qui portent la herse de perçage, grâce à quoi il est possible d'ioniser la carte gel immédiatement après l'opération de perçage.

L'invention concerne également un automate d'analyses médicales pour l'analyse de réactions chimiques ayant lieu dans au moins un réceptacle qui comprend une pluralité de puits contenant un ou plusieurs réactifs tout en étant fermés par au moins un opercule ledit automate comportant un dispositif de remplissage selon l'invention, des moyens pour amener ledit réceptacle vers ledit dispositif de remplissage, et des moyens pour analyser les réactions chimiques susceptibles de se dérouler dans les puits du réceptacle après que les moyens de remplissage ont déversé une quantité de liquide dans chacun des puits.

De préférence l'automate comporte une pluralité de réceptacles constitués par des cartes gel similaires ou différents les unes des autres.

Avantageusement, l'automate selon l'invention comporte en outre une station de contrôle pour vérifier le positionnement du liquide déversé dans les puits par les moyens de remplissage.

De préférence, cette station de contrôle comporte une caméra ainsi que des moyens de traitement d'images permettant d'identifier la présence ou non d'une poche d'air et d'éventuelles éclaboussures.

L'invention concerne également un procédé de remplissage d'un réceptacle de type carte gel muni d'une pluralité de puits fermés par un opercule, comprenant :
- une étape de perçage de l'opercule du réceptacle afin d'ouvrir les puits;
- une étape de suppression des charges électrostatiques susceptibles d'être portées par le réceptacle ; et
- une étape de remplissage au cours de laquelle une quantité de liquide est déversée dans chacun des puits du réceptacle.

De préférence, ce procédé est mis en oeuvre par le dispositif de remplissage conforme à la présente invention.

Avantageusement, l'étape de suppression des charges électrostatiques consiste à ioniser les puits du réceptacle en générant un champ électrique produisant un effet corona.

De préférence, mais pas nécessairement, l'étape de suppression des charges électrostatiques est réalisée après l'étape de perçage. Un intérêt est de pouvoir ioniser l'air contenu à l'intérieur des puits.

Avantageusement, l'étape de remplissage des puits est réalisée avec au moins une pipette, et lors de cette étape de remplissage, ladite pipette s'étend de manière coaxiale à l'un des puits.

Un intérêt est d'éviter que l'extrémité de la pipette ne vienne en contact avec des gouttelettes de réactif pouvant se trouver sur la paroi interne du puits, et donc d'éviter toute contamination de la pipette.

Selon l'invention, un moyen complémentaire d'éviter la contamination de la pipette est de placer l'extrémité inférieure de la pipette légèrement en dessous de l'opercule lors de l'étape de remplissage. De préférence, l'extrémité inférieure de la pipette est placée à quelques millimètres sous l'opercule.

Préférentiellement, lors de l'étape de remplissage, on crée une poche d'air (air-gap) entre le liquide déversé et un autre liquide préalablement présent dans les puits. Autrement dit, on crée une poche d'air entre le réactif contenu dans chacun des puits et les doses déversées.

Enfin et de manière avantageuse, le procédé selon l'invention comporte en outre une étape de vérification du positionnement du liquide déversé à l'issue de l'étape de remplissage. On vérifie principalement la bonne réalisation des poches d'air.

L'invention sera mieux comprise et ses avantages apparaîtront mieux à la lecture de la description détaillée qui suit, d'un mode de réalisation représenté à titre d'exemple non limitatif. La description se réfère aux dessins, sur lesquels :
- la figure **1** illustre de manière schématique un automate d'analyses médicales conforme à l'invention, qui comporte un dispositif de remplissage selon l'invention ;
- la figure **2** est une vue de face d'un réceptacle destiné à être utilisé avec l'automate de la figure **1** **;**
- la figure **3** est une vue en perspective d'un mode de réalisation préféré du dispositif de remplissage selon l'invention ;
- la figure **4** est une vue de détail de la rampe d'ionisation du dispositif de remplissage de la figure **3** **;** et
- la figure **5** montre la formation d'une poche d'air entre le réactif contenu dans un puits du réceptacle de la figure **2** et une dose de liquide dispensée par une pipette de l'automate de la figure **1****.**

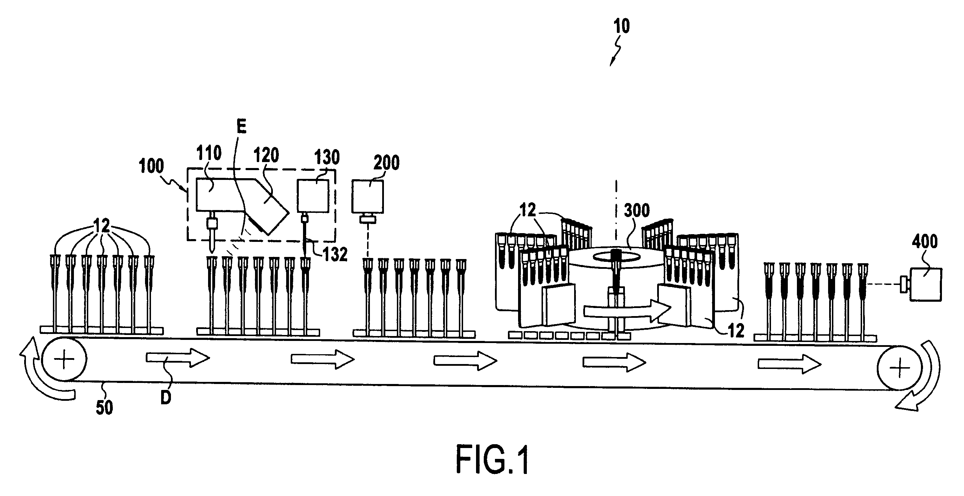

Sur la figure **1****,** on a représenté de manière très schématique et non limitative un automate d'analyses médicales **10** conforme à l'invention.

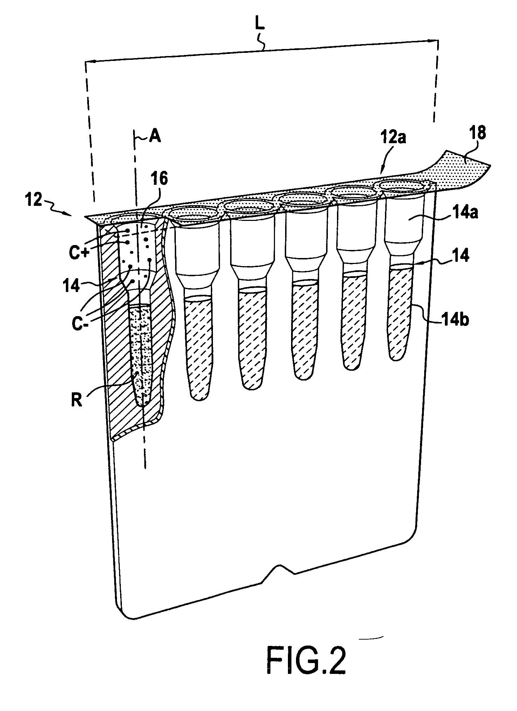

Cet automate **10** utilise des réceptacles consommables, en l'espèce des cartes gel **12** munies de puits **14,** bien connues par ailleurs. En se référant à la figure **2****,** on constate que chacune des cartes gel **12** de cet exemple comporte six puits **14** débouchant dans une paroi supérieure **12a** de la carte gel. Ces puits **14** présentent donc des ouvertures **16** formées dans la paroi supérieure **12a** de la carte gel, ces ouvertures **16** étant initialement obturées par un opercule **18** qui s'étend selon une direction longitudinale L de la carte gel **12.** Dans cet exemple, l'opercule **18** consiste en une bande mince scellée à la paroi supérieure de la carte gel **12.**

Comme on le comprend à l'aide de la figure **2****,** chaque puits **14** de la carte gel **12** contient de manière connue en soi un réactif **R,** ce réactif pouvant être différent d'un puits à l'autre.

Plus précisément, chaque puits **14** est constitué d'une cavité supérieure **14a** de forme sensiblement cylindrique reliée à une cavité inférieure **14b** également de forme sensiblement cylindrique par l'intermédiaire d'une cavité intermédiaire tronconique. La cavité supérieure **14a** présente un diamètre sensiblement plus grand que celui de la cavité inférieure **14b,** et les cavités supérieure **14a** et inférieure **14b** sont coaxiales d'axe commun **A.** Comme on le voit sur la figure **2****,** le réactif est contenu dans la cavité inférieure **14b,** le niveau de réactif étant situé légèrement en dessous de l'extrémité supérieure de la cavité inférieure **14b,** tandis que la cavité supérieure **14a** initialement vide, débouche dans la paroi supérieure **12a** de la carte gel **12.**

Il se trouve que les cartes gel **12,** réalisées en matière plastique, ont une propension à porter des charges électrostatiques **C⁺, C⁻,** on pense qu'elles sont générées lors des chocs que peuvent subir les cartes gel **12** lors de leur manutention.

En se référant à nouveau à la figure 1, on constate que l'automate comporte un convoyeur **50** qui permet de déplacer les cartes gel **12** l'automate **10** selon une direction d'amenée **D.** Bien évidemment tout autre type de convoyeur peut être utilisé sans sortir du cadre de la présente invention.

Considérée selon cette direction d'amenée **D,** l'automate **10** comporte successivement un dispositif de remplissage **100** conforme à l'invention, une station de contrôle **200** pour vérifier le positionnement du liquide déversé dans les puits par le dispositif de remplissage, une roue centrifuge **300** puis des moyens **400** pour analyser les réactions chimiques susceptibles de se dérouler dans les puits de la carte gel.

Les cartes gel **12** sont tout d'abord amenées vers le dispositif de remplissage **100,** ce dernier étant destiné à remplir les puits des cartes gel **12** avec un liquide dans une quantité prédéterminée.

Pour ce faire, le dispositif de remplissage **100** selon l'invention comporte tout d'abord un organe de perçage **110** pour perforer les opercules **18** des cartes gel.

Selon un aspect essentiel de l'invention, le dispositif de remplissage **100** comporte en outre des moyens **120** pour supprimer les charges électrostatiques susceptibles d'être portées par les cartes gel. Et bien évidemment, le dispositif de remplissage comporte également des moyens de remplissage **130** pour remplir les puits des cartes gel après perforation de l'opercule et suppression des charges électrostatiques. Il est précisé que, selon le mode préféré de l'invention, les moyens de remplissage **140** sont automatiques. Toutefois et sans sortir du cadre de la présente invention, ils pourraient aussi être constitués d'une pipette manuelle manipulée par un opérateur.

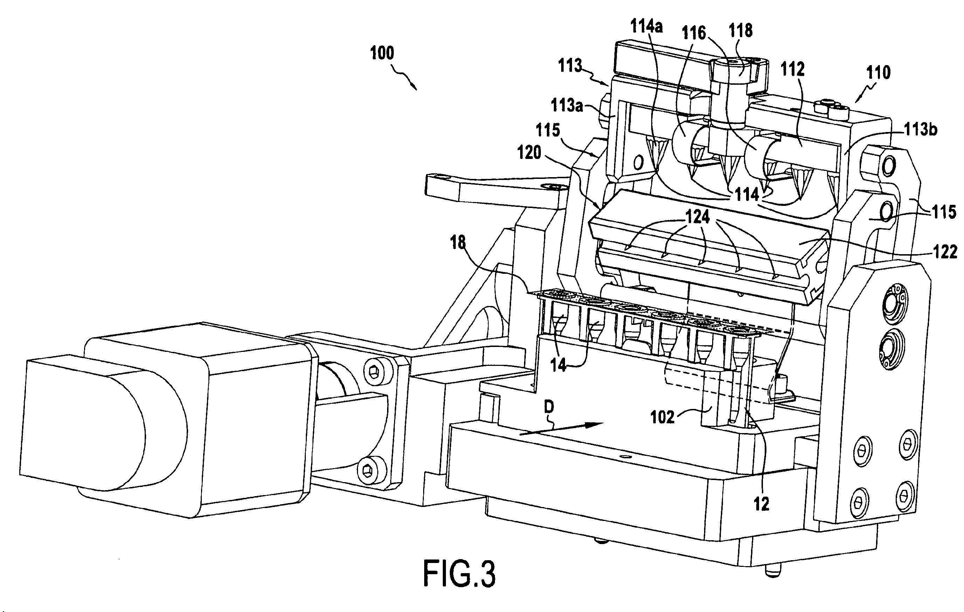

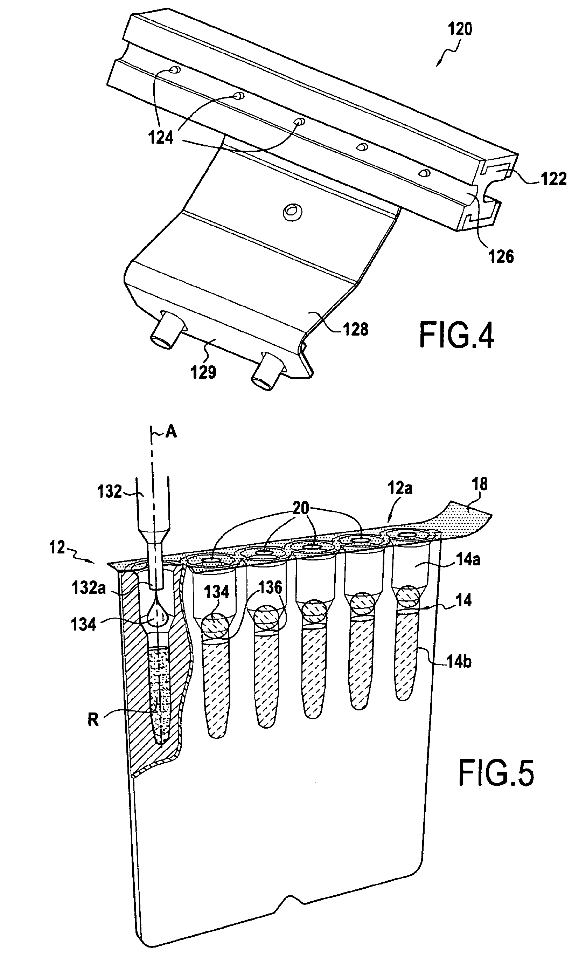

L'organe de perçage **110** et les moyens **120** pour supprimer les charges électrostatiques vont tout d'abord être décrits plus en détail à l'aide des figures **3** et **4****.**

L'organe de perçage **110** comporte une herse de perçage **112** qui est munie de six pointes **114,** ces pointes étant destinées à pénétrer dans les puits de la carte gel en traversant l'opercule **18** de façon à créer une série de trous **17** dans l'opercule. Les cartes gel **12** comportant également six puits **14,** on comprend que la herse **112** permet de réaliser en une seule fois six trous **17** dans l'opercule de chacune des cartes gel **12.**

Comme on le voit sur la figure **3****,** cette herse **112** s'étend transversalement par rapport à la direction d'amenée **D.**

Qui plus est, les pointes **114** de la herse **112** présentent de préférence des méplats **114a** afin de favoriser le perçage de l'opercule **18.**

Par ailleurs, une paire de lames-ressort **116** s'étendant entre les pointes **114** est prévue pour faciliter le dégagement de la herse de perçage **112** après la perforation de l'opercule **18.**

Enfin, on précise que la herse **112** est verrouillée à un support de herse **113** par un organe de verrouillage **118** permettant de démonter la herse **112.** Par ailleurs, ce support de herse **112** comporte deux bras mobiles **113a, 113b** entre lesquels s'étend la herse **112,** ces bras étant quant à eux reliés à des bielles **115** pivotantes qui permettent d'amener la herse **112,** selon un mouvement de translation circulaire, depuis une position de repos (représentée sur la figure **3****)** vers une position de travail dans laquelle les pointes **114** perforent l'opercule **18** de la carte gel.

Selon un aspect avantageux de l'invention, les moyens **120** pour supprimer les charges électrostatiques comprennent un ioniseur **122** constitué ici par une rampe d'ionisation qui est alimentée par des moyens d'alimentation conventionnels non représentés ici.

Cette rampe d'ionisation **122** est immobile par rapport à l'automate et s'étend transversalement par rapport à la direction d'amenée **D** entre les bras **113a** et **113b** du support de herse **113.** Comme on le voit sur la figure **3****,** la rampe d'ionisation **122** se situe en dessous des pointes **114** de la herse **112** lorsque cette dernière se trouve dans sa position de repos. Cette rampe **122** est également arrangée de telle sorte que les pointes **114** de la herse **112** ne touchent pas la rampe lors du déplacement de la herse **112** vers sa position de travail.

Par ailleurs, on voit sur la figure **3** que la rampe d'ionisation **122** comporte plusieurs électrodes **124,** en l'espèce cinq, faisant saillie depuis le fond d'une gorge longitudinale **126.**

En se référant maintenant à la figure **4****,** on constate que la rampe d'ionisation **122** est montée sur un support **128** ayant un pied de fixation **129.** La rampe est inclinée d'environ 60° par rapport à la verticale de sorte que les électrodes **124** de la rampe visent une zone dans laquelle la carte gel se trouve lors de l'opération de perçage de l'opercule **18.** De préférence, la distance entre la rampe d'ionisation et les ouvertures **16** des puits **14** est comprise entre 15 et 30 mm. En l'espèce, les électrodes **124** de la rampe d'ionisation **122** servent à générer un champ électrique **E,** du type corona, autour des puits **14** de la carte gel **12.** Pour ce faire, on peut choisir par exemple une alimentation de type auto-transformateur délivrant une onde sinusoïdale, de fréquence 50Hz, de différence de potentiel 4KV et de sortance 2.5mA sur chaque électrode.

On va maintenant expliquer le procédé de remplissage mis en oeuvre par le dispositif de remplissage **100** selon l'invention.

Comme on le voit sur la figure **3****,** les cartes gel **12** sont successivement amenées à proximité de l'organe de perçage **110,** dans un logement **102** s'étendant de manière transversale par rapport à la direction d'amenée **D,** de telle manière que, pendant l'opération de perçage, la carte gel **12** est maintenue dans un plan vertical transversal à la direction d'amenée **D.**

Lorsque l'organe de perçage **110** est actionné, la herse **112** bascule dans sa position de travail selon le mouvement de translation circulaire décrit ci-dessus, de sorte que les pointes **114** de la herse **112** viennent perforer l'opercule **18.** Ensuite, la herse **112** est ramenée dans sa position de repos telle que représentée sur la figure **3****.** A l'issue de l'étape de perçage, l'opercule **18** est percé de six trous **20** à l'endroit des puits **14.**

Après cette étape de perçage, la rampe d'ionisation est activée de manière à générer un champ électrique à effet corona autour des puits **14.** Comme expliqué ci-dessus, ce champ électrique à effet corona génère un air ionisé qui a pour effet de supprimer les charges électrostatiques **C⁺, C⁻** éventuellement portées par les puits des cartes gel **12.** De préférence, la durée d'ionisation des puits **14** est comprise entre 1 et 1,5 secondes.

Après l'étape d'ionisation, la carte gel **12** est amenée vers les moyens de remplissage **170.** Ces derniers comportent au moins une pipette **132** visible sur la figure **5****.** Comme on le voit sur cette figure, la pipette **132** est insérée successivement dans chacune des cavités supérieures **14a** des puits **14** par les trous **20** formés dans l'opercule **18** à la suite de l'opération de perçage. Lors de l'insertion de la pipette dans l'un des puits **14** à travers le trou **20,** l'extrémité inférieure **132a** de la pipette est amenée à quelques millimètres en dessous de l'opercule, tandis que la pipette est disposée de manière coaxiale par rapport à ce puits.

Ensuite la pipette **132** déverse une dose **134** de liquide, soit environ 10 µl, dans la cavité supérieure **14a,** comme cela a été représenté sur la figure **5** pour le puits situé près du bord gauche de la carte gel **12.**

Très préférentiellement, on fait en sorte de créer une poche d'air **136** entre la dose **134** et le réactif contenu dans la cavité inférieure **14b** des puits **14.** Cette poche d'air se situe essentiellement en bas de la cavité intermédiaire tronconique.

A l'issue de l'étape de remplissage, la carte gel **12** est amenée dans la station de contrôle **200** afin de vérifier la présence de poches d'air **136.**

Après cela, la carte gel **12** est incubée puis centrifugée grâce à la roue centrifuge **300.**

Le résultat des réactions chimiques ayant lieu dans les puits **14** est ensuite analysé à l'aide des moyens **400** d'analyse de réactions chimiques. De tels moyens, connus par ailleurs, comportent généralement un lecteur permettant de visualiser le résultat de la ou des réactions dans les puits **14** de la carte gel **12.**

## Revendications

1. Dispositif de remplissage (100) d'au moins un réceptacle (12) de type carte gel initialement fermé par un opercule (18), ledit dispositif étant **caractérisé en ce qu'**il comporte un organe de perçage (110) pour perforer l'opercule, des moyens (120) pour supprimer les charges électrostatiques susceptibles d'être portées par le réceptacle, et des moyens de remplissage (130) pour remplir le réceptacle après perforation de l'opercule et suppression des charges électrostatiques (C⁺, C⁻).

2. Dispositif de remplissage selon la revendication **1, caractérisé en ce que** le réceptacle est une carte (12) qui comporte une pluralité de puits (14) fermés par l'opercule (18), chacun des puits contenant un ou plusieurs réactifs (R).

3. Dispositif de remplissage selon la revendication **2, caractérisé en ce que** l'organe de perçage (120) comporte une herse de perçage (112) munie d'une pluralité de pointes de perçage (114) qui sont destinées à pénétrer dans les puits en traversant l'opercule.

4. Dispositif de remplissage selon la revendication **2** ou **3, caractérisé en ce que** les moyens de remplissage comportent au moins une pipette (132).

5. Dispositif de remplissage selon l'une quelconque des revendications **1** à **4, caractérisé en ce que** les moyens pour supprimer les charges électrostatiques (120) comprennent un ioniseur (122).

6. Dispositif de remplissage selon la revendication **5, caractérisé en ce qu'**il présente une direction d'amenée (D) du réceptacle vers l'organe de perçage, et **en ce que** l'ioniseur est constitué d'une rampe d'ionisation (122) s'étendant transversalement par rapport à cette direction d'amenée.

7. Dispositif de remplissage selon la revendication **5** ou **6, caractérisé en ce que** l'ioniseur (122) comporte une pluralité d'électrodes (134) visant une zone dans laquelle le réceptacle (12) est destiné à se trouver lors du perçage de l'opercule dudit réceptacle.

8. Dispositif de remplissage selon l'une quelconque des revendications **5** à **7, caractérisé en ce que** l'ioniseur (122) est destiné à générer un champ électrique (E) produisant un effet corona.

9. Automate d'analyses médicales (10) pour l'analyse de réactions chimiques ayant lieu dans au moins un réceptacle (12) qui comprend une pluralité de puits (14) contenant un ou plusieurs réactifs tout en étant fermés par au moins un opercule (18), ledit automate comportant un dispositif de remplissage (100) selon l'une quelconque des revendications **1** à **8,** des moyens (50) pour amener ledit réceptacle vers ledit dispositif de remplissage, et des moyens (400) pour analyser les réactions chimiques susceptibles de se dérouler dans les puits du réceptacle après que les moyens de remplissage (130) ont déversé une quantité de liquide dans chacun des puits.

10. Automate selon la revendication **9, caractérisé en ce qu'**il comporte en outre une station de contrôle (200) pour vérifier le positionnement du liquide déversé dans les puits par les moyens de remplissage (130).

11. Procédé de remplissage d'un réceptacle (12) de type carte gel muni d'une pluralité de puits fermés par un opercule, **caractérisé en ce qu'**il comprend :
- une étape de perçage de l'opercule du réceptacle afin d'ouvrir les puits;
- une étape de suppression des charges électrostatiques susceptibles d'être portées par le réceptacle ; et
- une étape de remplissage au cours de laquelle une quantité de liquide est déversée dans chacun des puits du réceptacle.

12. Procédé de remplissage selon la revendication **11, caractérisé en ce que** l'étape de suppression des charges électrostatiques consiste à ioniser les puits du réceptacle en générant un champ électrique produisant un effet corona.

13. Procédé de remplissage selon la revendication **11** ou **12, caractérisé en ce que** l'étape de suppression des charges électrostatiques est réalisée après l'étape de perçage.

14. Procédé de remplissage selon l'une quelconque des revendications **11** à **13, caractérisé en ce que** l'étape de remplissage des puits est réalisée avec au moins une pipette, et **en ce que**, lors de cette étape de remplissage, ladite pipette s'étend de manière coaxiale à l'un des puits.

15. Procédé de remplissage selon l'une quelconque des revendications **11** à **14, caractérisé en ce que** l'étape de remplissage est réalisée avec au moins une pipette présentant une extrémité inférieure, et **en ce que**, lors de cette étape de remplissage, l'extrémité inférieure est placée légèrement en dessous de l'opercule.

16. Procédé de remplissage selon l'une quelconque des revendications **11** à **15, caractérisé en ce que**, lors de l'étape de remplissage, on crée une poche d'air entre le liquide déversé et un autre liquide préalablement présent dans les puits.

17. Procédé de remplissage selon l'une quelconque des revendications **11** à **16, caractérisé en ce qu'**il comporte en outre une étape de vérification du positionnement du liquide déversé à l'issue de l'étape de remplissage.

## Patentansprüche

1. Vorrichtung zum Füllen (100) wenigstens eines Behältnisses (12) des Typs Gelkarte, der ursprünglich durch einen Deckel (18) geschlossen ist, wobei die Vorrichtung **dadurch gekennzeichnet ist, dass** sie ein Durchstoßelement (110) zum Durchstoßen des Deckels, Mittel (120) zur Unterdrückung der elektrostatischen Ladungen, die von dem Behältnis getragen werden können, und Mittel zum Füllen (130) umfasst, um das Behältnis nach dem Durchstoßen des Deckels und der Unterdrückung der elektrostatischen Ladungen (C⁺, C⁻) umfasst.

2. Füllvorrichtung nach Anspruch 1, **dadurch gekennzeichnet, dass** das Behältnis eine Karte (12) ist, die eine Vielzahl von Vertiefungen (14) umfasst, die durch den Deckel (18) geschlossen sind, wobei jede dieser Vertiefungen ein oder mehrere Reagenzien (R) enthält.

3. Füllvorrichtung nach Anspruch 2, **dadurch gekennzeichnet, dass** das Durchstoßelement (120) eine Durchstoßegge (112) umfasst, die mit einer Vielzahl von Durchstoßspitzen (114) versehen ist, die dazu bestimmt sind, in die Vertiefungen durch den Deckel hindurch einzudringen.

4. Füllvorrichtung nach Anspruch 2 oder 3, **dadurch gekennzeichnet, dass** die Füllmittel mindestens eine Pipette (132) umfassen.

5. Füllvorrichtung nach einem der Ansprüche 1 bis 4, **dadurch gekennzeichnet, dass** die Mittel zur Unterdrückung der elektrostatischen Ladungen (120) ein lonisierelement (122) umfassen.

6. Füllvorrichtung nach Anspruch 5, **dadurch gekennzeichnet, dass** sie eine Zuführrichtung (D) des Behältnisses zu dem Durchstoßelement aufweist, und dass das lonisierelement von einer lonisierrampe (122) gebildet ist, die sich quer zu dieser Zuführrichtung erstreckt.

7. Füllvorrichtung nach Anspruch 5 oder 6, **dadurch gekennzeichnet, dass** das lonisierelement (122) eine Vielzahl von Elektroden (134) umfasst, die eine Zone anvisieren, in der sich das Behältnis (12) beim Durchstoßen des Deckels des Behältnisses befinden soll.

8. Füllvorrichtung nach einem der Ansprüche 5 bis 7, **dadurch gekennzeichnet, dass** das lonisierelement (122) dazu bestimmt ist, ein elektrisches Feld (E), das einen Corona-Effekt hervorruft, zu erzeugen.

9. Medizinisches Analysegerät (10) für die Analyse von chemischen Reaktionen, die in mindestens einem Behältnis (12) stattfinden, umfassend eine Vielzahl von Vertiefungen (14), die ein oder mehrere Reagenzien enthalten, wobei sie durch mindestens einen Deckel (18) geschlossen sind, wobei das Gerät eine Füllvorrichtung (100) nach einem der Ansprüche 1 bis 8, Mittel (50), um das Behältnis zu der Füllvorrichtung zu führen, und Mittel (400) umfasst, um die chemischen Reaktionen zu analysieren, die in den Vertiefungen des Behältnisses ablaufen können, nachdem die Füllmittel (130) eine Flüssigkeitsmenge in jede der Vertiefungen geleert haben.

10. Gerät nach Anspruch 9, **dadurch gekennzeichnet, dass** es ferner eine Kontrollstation (200) umfasst, um die Positionierung der durch die Füllmittel (130) in die Vertiefungen geleerten Flüssigkeit zu überprüfen.

11. Verfahren zum Füllen eines Behältnisses (12) des Typs Gelkarte, die mit einer Vielzahl von durch einen Deckel verschlossenen Vertiefungen versehen ist, **dadurch gekennzeichnet, dass** es umfasst:
- einen Schritt des Durchstoßens des Deckels des Behältnisses, um die Vertiefungen zu öffnen;
- einen Schritt der Unterdrückung der elektrostatischen Ladungen, die von dem Behältnis getragen werden können; und
- einen Schritt des Füllens, während dessen eine Flüssigkeitsmenge in jede der Vertiefungen des Behältnisses geleert wird.

12. Füllverfahren nach Anspruch 11, **dadurch gekennzeichnet, dass** der Schritt der Unterdrückung der elektrostatischen Ladungen darin besteht, die Vertiefungen des Behältnisses zu ionisieren, wobei ein einen Corona-Effekt hervorrufendes elektrisches Feld erzeugt wird.

13. Füllverfahren nach Anspruch 11 oder 12, **dadurch gekennzeichnet, dass** der Schritt der Unterdrückung der elektrostatischen Ladungen nach dem Schritt des Durchstoßens durchgeführt wird.

14. Füllverfahren nach einem der Ansprüche 11 bis 13, **dadurch gekennzeichnet, dass** der Schritt des Füllens der Vertiefungen mit mindestens einer Pipette erfolgt, und dass sich während dieses Schrittes des Füllens die Pipette koaxial zu einer der Vertiefungen erstreckt.

15. Füllverfahren nach einem der Ansprüche 11 bis 14, **dadurch gekennzeichnet, dass** der Schritt des Füllens mit mindestens einer Pipette erfolgt, die ein unteres Ende aufweist, und dass während dieses Schrittes des Füllens das untere Ende leicht unterhalb des Deckels angeordnet ist.

16. Füllverfahren nach einem der Ansprüche 11 bis 15, **dadurch gekennzeichnet, dass** während des Schrittes des Füllens eine Lufttasche zwischen der entleerten Flüssigkeit und einer weiteren vorher in den Vertiefungen vorhandenen Flüssigkeit erzeugt wird.

17. Füllverfahren nach einem der Ansprüche 11 bis 16, **dadurch gekennzeichnet, dass** es ferner einen Schritt der Überprüfung der Positionierung der entleerten Flüssigkeit nach dem Schritt des Füllens umfasst.

## Claims

1. A device (100) for filling at least one receptacle (12) of the gel card type initially sealed by a cap (18), said device being **characterized in that** includes a piercing member (110) to perforate the cap, means (120) for eliminating the electrostatic charges that may be borne by the receptacle, and filling means (130) to fill the receptacle after perforation of the cap and elimination of the electrostatic charges (C⁺, C⁻).

2. The filling device according to claim **1, characterized in that** the receptacle is a card (12), which includes a plurality of wells (14) sealed by the cap (18), each of the wells containing one or more reagents (R).

3. The filling device according to claim **2, characterized in that** the piercing member (120) includes a piercing rake (112) provided with a plurality of piercing tips (114) that are intended to penetrate the wells while passing through the cap.

4. The filling device according to claim **2** or **3, characterized in that** the filling means comprise at least one pipette (132).

5. The filling device according to any one of claims **1** to **4, characterized in that** the means for eliminating the electrostatic charges (120) comprise an ionizer (122).

6. The filling device according to claim **5, characterized in that** it has an intake direction (D) for the receptacle toward the piercing member, and **in that** the ionizer is made up of an ionization ramp (122) extending transversely relative to said intake direction.

7. The filling device according to claim **5** or **6, characterized in that** the ionizer (122) includes a plurality of electrodes (134) targeting a zone in which the receptacle (12) is intended to be located during piercing of the cap of said receptacle.

8. The filling device according to any one of claims **5** to **7, characterized in that** the ionizer (122) is intended to generate an electrical field (E) producing a corona effect.

9. A medical analysis machine (10) for analyzing chemical reactions taking place in at least one receptacle (12) that comprises a plurality of wells (14) containing one or more reagents while being sealed by at least one cap (18), said machine including a filling device (100) according to any one of claims **1** to **8,** means (50) for bringing said receptacle toward said filling device, and means (400) for analyzing the chemical reactions that can occur in the wells of the receptacle after the filling means (130) have poured a quantity of liquid into each of the wells.

10. The machine according to claim **9, characterized in that** it also includes a checking station (200) to verify the positioning of the liquid poured into the wells by the filling means (130).

11. A method of filling a receptacle (12) of the gel card type provided with a plurality of wells sealed by a cap, **characterized in that** it comprises:
- a step of piercing the cap of the receptacle in order to open the well;
- a step of eliminating electrostatic charges that may be borne by the receptacle; and
- a filling step during which a quantity of liquid is poured into each of the wells of the receptacle.

12. The filling method according to claim **11, characterized in that** the step for eliminating the electrostatic charges consists of ionizing the well of the receptacle by generating an electrical field producing a corona effect.

13. The filling method according to claim **11** or **12, characterized in that** the step of eliminating the electrostatic charges is carried out after the piercing step.

14. The filling method according to any one of claims **11** to **13, characterized in that** the step of filling the wells is carried out with at least one pipette, and **in that**, during said filling step, said pipette extends coaxially to one of the wells.

15. The filling method according to any one of claims **11** to **14, characterized in that** the filling step is carried out with at least one pipette having a lower end, and **in that**, during said filling step, the lower end is placed slightly below the cap.

16. The filling method according to any one of claims **11** to **15, characterized in that**, during the filling step, an air gap is created between the poured liquid and another liquid previously present in the wells.

17. The filling method according to any one of claims **11** to **16, characterized in that** it further includes a step of verifying the positioning of the liquid poured at the end of the filling step.
